# EUROPEAN PATENT SPECIFICATION

(11) **EP 2 217 651 B1**
(45) Date of publication and mention of the grant of the patent: **28.08.2013**
(21) Application number: 08860737.9
(22) Date of filing: 02.12.2008
(51) Int. Cl.: C08L 75/04, C08L 75/08, C08L 63/00, C08J 5/24, C09J 163/00, C08K 5/357, C08G 18/12, C08G 18/48, C08G 59/40, C08G 18/66

(54) **CURABLE COMPOSITIONS CONTAINING ISOCYANATE-BASED TOUGHENERS**
HÄRTBARE ZUSAMMENSETZUNGEN MIT HÄRTUNGSMITTELN AUF ISOCYANATBASIS
COMPOSITIONS DURCISSABLES CONTENANT DES DURCISSEURS À BASE D'ISOCYANATES

(30) Priority: 06.12.2007 US 992916 P
(43) Date of publication of application: 18.08.2010
(73) Proprietor: Henkel AG & Co. KGaA, 40589 Düsseldorf (DE); Henkel Corporation, Rocky Hill, CT 06067 (US)
(72) Inventor: KREILING, Stefan, 35452 Heuchelheim (DE); SCHONFELD, Rainer, 40221 Dusseldorf (DE); TADEN, Andreas, 40597 Dusseldorf (DE); KUX, Michael, 40789 Monheim (DE); KUSTER, Harald, 40625 Dusseldorf (DE); LEHMANN, Stanley, L., Martinez CA 94553 (US)
(74) Representative: Kann, Wolfgang
(86) International application number: PCT/US2008/013290
(87) International publication number: WO 2009/075743

(56) References cited:
- WO-A1-2007/064801
- WO-A1-2008/076244
- WO-A2-2009/075744
- US-A- 4 607 091
- US-A1- 2005 070 634
- US-B1- 6 207 786
- US-B2- 6 515 081
- US-B2- 6 743 852
- TAKEICHI T ET AL: "Synthesis and characterization of poly(urethane-benzoxazine) films as novel type of polyurethane/phenolic resin composites", JOURNAL OF POLYMER SCIENCE. PART A, POLYMER CHEMISTRY, JOHN WILEY & SONS, INC, US, vol. 38, no. 22, 15 November 2000 (2000-11-15), pages 4165-4176, XP002562050, ISSN: 0887-624X, DOI: _
- RIMDUSIT, S. ET AL.: 'Toughening of polybenzoxazine by alloying with urethane prepolymer and flexible epoxy: a comparative study' POLYM. ENG. SCI. 2005, pages 288 - 296, XP001227910

## Description

### BACKGROUND OF THE INVENTION

### Field of the invention

The present invention relates to curable compositions comprising (a) N-arylated benzoxazines, and (b) a prepolymer produced from a diisocyanate having two isocyanate groups with different reactivity.

### Brief description of related technology

Mixtures of epoxy resins and phenol-capped polyurethanes are known. Polyurethanes are obtained ordinarily by reacting isocyanates with hydroxy-containing compounds; the resulting polyurethane products should no longer contain free, phenolic hydroxyl groups. Such polyurethane products may be combined with epoxy resins and amine curing agents to give curable coating agents reportedly distinguished by improved elasticity. See e.g. U.S. Patent Nos. 4,423,201 and 3,442,974.

Epoxy resins can also be mixed with copolymers based on butadiene and acrylonitrile to enhance the impact strength and/or the flexibility of the cured product. Ordinarily, however, such copolymers compromise the tensile shear strength and the glass transition temperature of the resulting cured products.

U.S. Patent No. 5,278,257 (Muelhaupt) refers to and claims a composition containing a copolymer based on at least one 1,3-diene and at least one polar, ethylenically unsaturated comonomer, a phenol-terminated polyurethane, polyurea or polyurea-urethane of a certain formula, after the removal of the terminal isocyanate, amino or hydroxyl groups, which is soluble or dispersible in epoxy resins, it being necessary for at least one of these groups to be a tertiary amine and where the ratio by weight of the comonomer to the polyurethane, polyurea or polyurea-urethane is from 5:1 to 1:5, and an epoxy resin having at least two 1,2-epoxide groups per molecule.

U.S. Patent Application Publication No. 2005/0070634 describes a composition comprising a) one or more epoxy resins; b) one or more rubber modified epoxy resins; c) one or more toughening compositions comprising the reaction product of one or more isocyanate terminated prepolymers and one or more capping compounds having one or more bisphenolic, phenolic, benzyl alcohol, aminophenyl or, benzylamino moieties where the reaction product is terminated with the capping compound; d) one or more curing agents and one or more catalysts for epoxy resins which initiates cure at a temperature of about 100°C or greater; and e) optionally, fillers, adhesion promoters, wetting agents and rheological additives useful in epoxy adhesive compositions. The resulting adhesive composition is reported to have a viscosity at 45°C of about 20 Pa·s to about 400 Pa·s.

Blends of epoxy resins and benzoxazines are also known. See e.g. U.S. Patent Nos. 4,607,091 (Schreiber), 5,021,484 (Schreiber), 5,200,452 (Schreiber). These blends appear to be potentially useful commercially, as the epoxy resins can reduce the melt viscosity of benzoxazines allowing for the use of higher filler loading while maintaining a processable viscosity. However, epoxy resins oftentimes undesirably increase the temperature at which benzoxazines polymerize.

Ternary blends of epoxy resins, benzoxazine and phenolic resins are known as well. See e.g. U.S. Patent No. 6,207,786 (Ishida).

Blends of benzoxazines and curable materials other than epoxy and/or phenolics are also known. To that end, U.S. Patent No. 6,620,925 (Musa) is directed to and claims a curable composition comprising certain benzoxazine compounds without reactive functionality other than the benzoxazine (apart from allyl and propargyl which are disclosed but not claimed) and a curable compound or resin selected from vinyl ethers, vinyl silanes, compounds or resins containing vinyl or allyl functionality, thiol-enes, compounds or resins containing cinnamyl or styrenic functionality, fumarates, maleates, acrylates, maleimides, cyanate esters, and hybrid resins containing both vinyl silane and cinnamyl, styrenic, acrylate or maleimide functionality.

In addition, U.S. Patent No. 6,743,852 (Dershem) discloses combinations of liquid benzoxazines and a thermosetting resin composition for adhering materials with dissimilar coefficients of thermal expansion comprising a) a benzoxazine compound in liquid form, b) thermoset compounds including epoxy, cyanate ester, maleimide, acrylate, methacrylate, vinyl ether, styrenic, vinyl ester, propargyl ether, diallyl amide, aromatic acetylene, benzocyclobutene, thiolenes, maleate, oxazoline, and itaconate, c) optionally, one or more anti-oxidants, bleed control agents, fillers, diluents, coupling agents, adhesion promoters, flexibilizers, dyes and pigments, and d) a cure initiator.

Rimdusit et al. teaches in "Toughening of Polybenzoxazine by Alloying with Polyurethane Prepolymer and flexible Epoxy: A comparative study", Polym. Eng. Sci. (2005) 288-296 the use of isophorone diisocyanate based polyurethane-prepolymers alloyed with polybenzoxazine and flexible epoxy.

Cured compositions showing improved toughness and compression after impact are disclosed in International Patent Application Publication No. WO 2007/064801 A1 (Li). The so disclosed curable compositions comprise (a) a large variety of benzoxazines, in combination with (b) a combination of adducts one of which is prepared from hydroxy-containing compounds, isocyanate-containing compounds and phenolic compounds and the second of which is prepared from the first adduct and epoxy-containing compounds, (c) epoxy resins and (d) optionally tougheners.

Notwithstanding the state of the technology it would be desirable to provide alternative curable compositions that provide toughening solutions to performance deficiencies in some curable compositions.

### SUMMARY OF THE INVENTION

The present invention provides compositions that include N-arylated benzoxazine components in combination with end-capped prepolymers (prepared from diisocyanates containing two isocyanate groups with different reactivity). Such curable compositions according to the invention show sufficient flexural modulus and toughness, even without added epoxy resin. However, the curable compositions of the present invention can also be supplemented with epoxy resins without losing their advantages properties in case the use of the epoxy resin is desired for specific applications.

The present invention thus provides curable compositions comprising: (A) an N-arylated benzoxazine component, and (B) a prepolymer of the following general structure:

P-(X-CO-NH-D-NH-CO-Y-E)_{z}

where P is a z-valent residue of an oligomer or polymer; X and Y independently are selected from the group consisting of NR', O and S, where R' is hydrogen or a residue selected from the group consisting of aliphatic, heteroaliphatic, araliphatic, heteroaraliphatic, aromatic and heteroaromatic residues; D is a divalent residue of a diisocyanate comprising two isocyanate groups having different reactivity, from which the two isocyanate groups with different reactivity have been removed to form two binding sites (valences); E is an end-capping residue, selected from the group consisting of aliphatic, heteroaliphatic, araliphatic, heteroaraliphatic, aromatic and heteroaromatic residues; and z is an integer of 1 to 12.

The curable compositions of the present invention can be prepared by mixing the N-arylated benzoxazine with the pre-polymer.

The prepolymer can be build by reacting a polymer P-(XH)_{z}, wherein the z XH groups are independently NHR', OH or SH, are reacted with a diisocyanate D-(NCO)₂ and an end-capping reagent E-YH. The reaction is preferably carried out in a way that each of the z XH groups is reacted with one molecule of the diisocyanate to obtain an isocyanate terminated intermediate having the following structure:

P-(X-CO-NH-D-NCO)_{z}

where the residues are as described above. This intermediate is finally reacted with the an appropriate amount of the end-capper E-YH to react essentially all of the terminal isocyanate groups and to obtain the target coumpund above.

Suitable polymers P-(XH)_{z}, diisocyanates D-(NCO)₂ and end-cappers E-YH will be described in detail below as well as suitable N-arylated benzoxazines.

The compositions of the present invention are in particular suitable as adhesives, sealants and matrices for the preparation of reinforced material such as prepregs and towpreg.

Therefore it is another object of the invention to provide an adhesive, sealant or coating composition comprising or consisting of the curable composition of the present invention.

The invention also provides a cured product of the composition of the present invention, in particular cured products containing bundles or layers of fibers, and a method of preparing such material.

### DETAILED DESCRIPTION OF THE INVENTION

### N-arylated benzoxazines

The term "N-arylated benzoxazines" as used herein refers to any benzoxazines carrying an aryl residue directly bound at the benzoxazine nitrogen atom.

One group of N-arylated benzoxazines of the present invention may be embraced by the following structure: 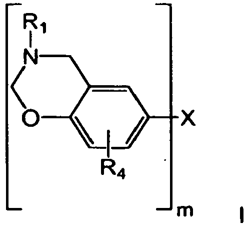 where m is 1-4, X is selected from a direct bond (when m is 2), alkyl (when m is 1), alkylene (when m is 2-4), carbonyl (when m is 2), oxygen (when m is 2), thiol (when m is 1), sulfur (when m is 2), sulfoxide (when m is 2), and sulfone (when m is 2), R₁ is aryl, and R₄ is selected from hydrogen, halogen, alkyl, alkenyl, or R₄ is a divalent residue creating a naphthoxazine residue out of the benzoxazine structure.

More specifically, within structure I the benzoxazine may be embraced by the following structure: 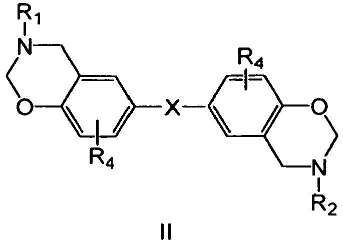 where X is selected from a direct bond, CH₂, C(CH₃)₂, O, C=O, S, S=O and O=S=O, R₁ and R₂ are the same or different aryl residues and R₄ are the same or different and defined as above.

Representative benzoxazines within structure II include: 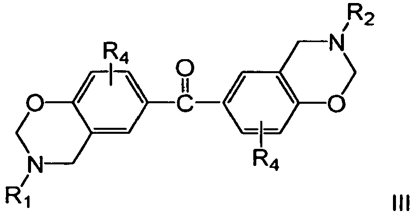 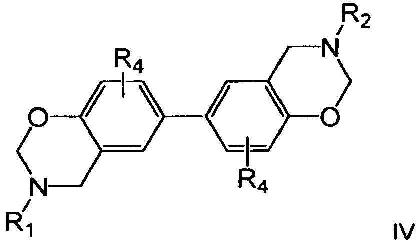 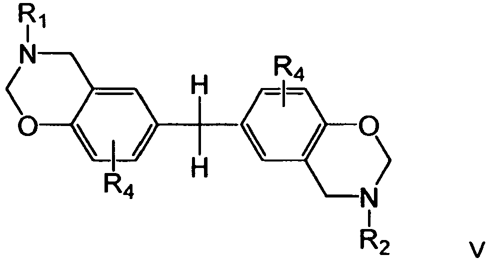 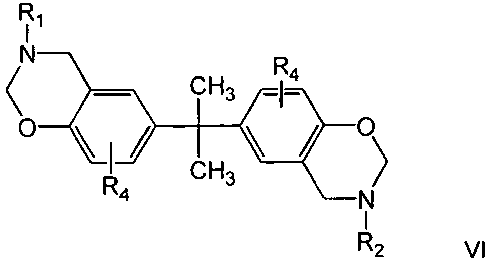 where R₁, R₂ and R₄ are as defined above.

Alternatively, the N-arylated benzoxazine may be embraced by the following structure: 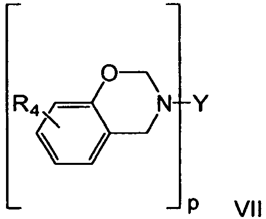 where p is 2, Y is selected from biphenyl (when p is 2), diphenyl methane (when p is 2), diphenyl isopropane (when p is 2), diphenyl sulfide (when p is 2), diphenyl sulfoxide (when p is 2), diphenyl sulfone (when p is 2), and diphenyl ketone (when p is 2), and R₄ is selected from hydrogen, halogen, alkyl, alkenyl or R₄ is a divalent residue creating a naphthoxazine residue out of the benzoxazine structure. Benzoxazines of general structure VII are preferred.

Though not embraced by structures I or VII additional benzoxazines are within the following structures: 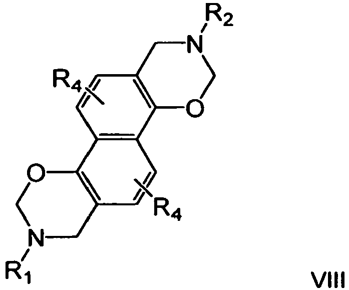 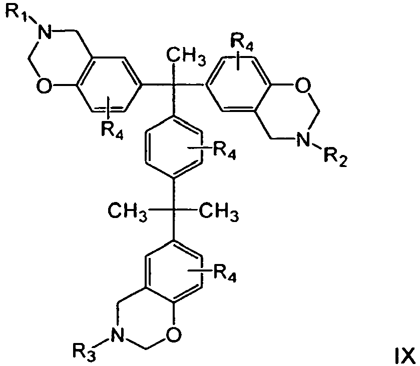 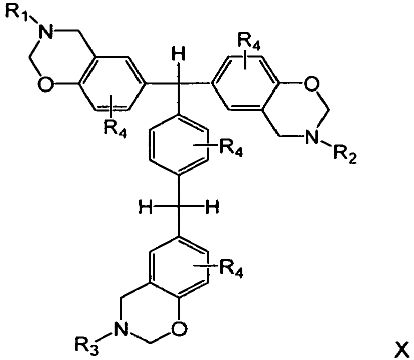 where R₁, R₂ and R₄ are as defined above, and R₃ is defined as R₁ or R₂.

Specific examples of suitable N-arylated benzoxazines include: 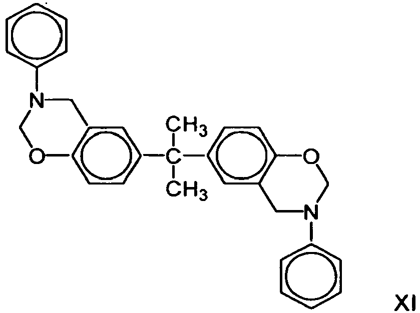 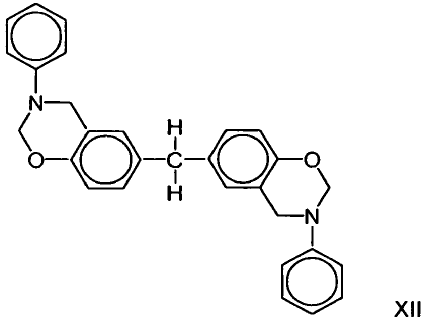 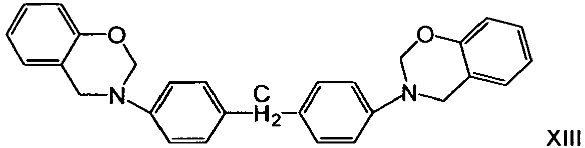 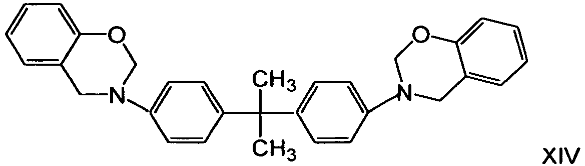 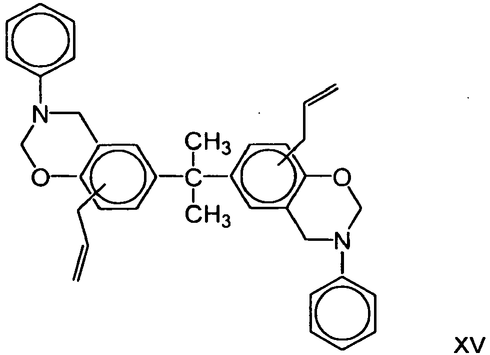 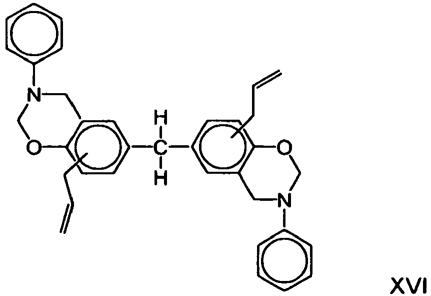 whereby the N-arylated benzoxazines of formulas XIII and XIV are preferred and the N-arylated benzoxazine of formula XIII is most preferred.

The benzoxazine component may include the combination of multifunctional benzoxazines and monofunctional benzoxazines, or may be the combination of one or more multifunctional benzoxazines or one or more monofunctional benzoxazines.

Examples of monofunctional benzoxazines may be embraced by the following structure: 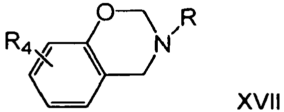 where R is an aryl residue with or without substitution on one, some or all of the available substitutable sites, and R₄ is selected from hydrogen, halogen, alkyl, and alkenyl, or R₄ is a divalent residue creating a naphthoxazine residue out of the benzoxazine structure.

For instance, monofunctional benzoxazines may be embraced by the structure 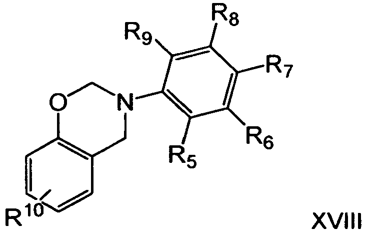 where in this case R¹⁰ is selected from alkyl, alkenyl, each of which being optionally substituted or interupted by one or more O, N, S, C=O, COO, and NHC=O, and aryl; n is 0-4; and R₅-R₉ are independently selected from hydrogen, alkyl, alkenyl, each of which being optionally substituted or interupted by one or more O, N, S, C=O, COOH, and NHC=O, and aryl.

A specific example of such a monofunctional benzoxazine is: 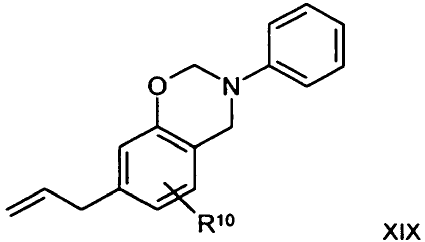 where R¹⁰ is as defined above.

Benzoxazines are presently available commercially from several sources, including Huntsman Advanced Materials; Georgia-Pacific Resins, Inc.; and Shikoku Chemicals Corporation, Chiba, Japan, the last of which offers among others Bisphenol A-aniline, Bisphenol A-methylamin, Bisphenol F-aniline benzoxazine resins. If desired, however, instead of using commercially available sources, the benzoxazine may typically be prepared by reacting a phenolic compound, such as a bisphenol A, bisphenol F, bisphenol S or thiodiphenol, with an aldehyde and an aryl amine. U.S. Patent No. 5,543,516, hereby expressly incorporated herein by reference, describes a method of forming benzoxazines, where the reaction time can vary from a few minutes to a few hours, depending on reactant concentration, reactivity and temperature. See e.g. U.S. Patent Nos. 4,607,091 (Schreiber), 5,021,484 (Schreiber), 5,200,452 (Schreiber) and 5,443,911 (Schreiber).

The N-arylated benzoxazine may be present in the inventive composition in an amount in the range of about 50 to about 95 percent by weight, more preferably about 55 to about 85 percent by weight, and most preferably about 60 to about 80 percent by weight, based on the total weight of components A) and B) of the curable composition of the present invention. Amount of less than 50 percent by weight will usually negatively affect the flexural modulus of the cured compositions and amounts excluding 95 percent of N-arylated benzoxazines will usually lead to cured composition with only small increase in toughness represented by K_{1C} and G_{1C} values.

Benzoxazine polymerization can be self-initiated under elevated temperature conditions and also by inclusion of anhydrides and/or cationic initiators, such as Lewis acids, and other known cationic initiators, such as metal halides; organometallic derivatives; metallophorphyrin compounds such as aluminum phthalocyanine chloride; methyl tosylate, methyl triflate, and triflic acid; and oxyhalides. Likewise, basic materials, such as imidizaoles, may be used to initiate polymerization.

### Prepolymers ("PP")

The PP as noted are prepared reacting one or more hydroxyl, amino and/or thiol containing polymers, in particular such polymers introducing thermoplastic properties into the prepolymer, with one or more diisocyanates having two isocyanate groups with different reactivity and one or more end-capping agents ("end-cappers") comprising at least one hydroxyl, thiol or amino group being reactive towards isocyanate.

For these reactants, the hydroxyl, amino and/or thiol containing polymer, is reacted with one or more diisocyanates having two isocyanate groups with different reactivity for a time and amount sufficient to ensure isocyanate capping of the hydroxyl, amino and/or thiol containing polymer or oligomer. Thus, the polymer or oligomer may be mixed with one or more diisocyanates having two isocyanate groups with different reactivity and reacted at a temperature in the range of about 50°C to about 80°C for a period of about 0.5 to 2.5 hours, desirably under an inert atmosphere, such as a nitrogen blanket, to form an isocyanate-terminated prepolymer intermediate, with which the end-capper is reacted resulting in the formation of prepolymer to be used in the compositions of the present invention.

Alternative routes can be used to prepare the prepolymer, as well. Illustrative of such alternative routes is where the reaction is performed in the presence of a condensation catalyst. Examples of such catalysts include the stannous salts of carboxylic acids, such as stannous octoate, stannous oleate, stannous acetate, and stannous laureate; dialkyltin dicarboxylates, such as dibutyltin dilaureate and dibutyltin diacetate; tertiary amines and tin mercaptides. When used, the amount of catalyst employed is generally between about 0.00025 and about 5 percent by weight of the catalyzed reactants, depending on the nature of the reactants.
The PP (i.e. component B) may be used in an amount of 5 to 50, such as 10 to 30, most preferably 15 to 25 percent by weight, based on the total weight of components A) and B) of the curable composition of the invention.

### Hydroxy, amino and/or thiol containing polymers P-(XH)_{z}

The polymeric or oligomeric part P of the P-(XH)_{z} polymer may be of such nature to introduce thermoplastic properties to the pre-polymer. Therefore the chemical nature is variable in a wide range embracing polyethers, polyesters, polyamides, polyacrylates, polymethacrylates, polybutadienes, and polysiloxanes, of which the polyethers are desirable.

P can be linear or branched. P itself can already include urethane, urea or thiourethane groups originating from the reaction of low-molecular weight polyol, polyamines or polythiols. For example a triol such as glycerol or trimethylolpropane can be reacted with a polyisocyanate such as a diisocyanate to prepare an isocyanate terminated low-molecular weight monomer to which for example polyetherpolyols such as polyether diols can be attached. If such chain-extension reaction is carried out with diisocyanates, it is most preferred to use diisocyanates wherein the two isocyanate groups exhibit different reactivity.

The hydroxyl, amino and/or thiol containing polymer (P-(XH)_{z}, definitions as above) used to make the prepolymer should preferably have a number average molecular weight ("Mₙ") of 500 to 4,000 g/mol more preferably 700 to 2,000 g/mol and most preferably 800 to 1,600 g/mol, as measured by gel permeation chromatography ("GPC") using polyethylene glycol standards for calibration purposes.

The PP thus should have a number average molecular weight in the range of 1,000 to 100,000 g/mol, such as 2,000 to 40,000 g/mol, measured as before with GPC.

The most preferred residue P is a polyalkylene oxide residue. The polyalkylene oxide include a series of hydrocarbon groups separated by oxygen atoms and terminated with hydroxyl, amino or thiol.

The hydrocarbon groups should preferably be alkylene groups - straight or branched chain - and should preferably have from 2 to about 6 carbons, such as about 2 to about 4 carbon atoms, desirably about 3 to about 4 carbon atoms.

The alkylene groups may be thus derived from ethylene oxide, propylene oxides, butylene oxides or tetrahydrofuran. The hydroxyl, amino and/or thiol terminated polyalkylene oxide should preferably have a number average molecular weight of about 500 to about 4,000 g/mol, such as about 700 to about 2,000 g/mol and most preferably 800 to 1,800 g/mol.

For the purpose of the present invention, not only one polymer P-(XH)_{z} but also mixtures of polymers P-(XH)_{z} can be used for the preparation of the prepolymers PP. Within those mixtures the chemical nature of P as well as the molecular weights may vary within the described ranges.

A preferred hydroxy-containing polymer to be used as P-(XH)_{z} can be described by structure XX: 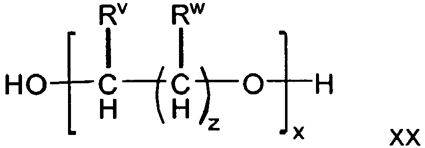 where R^{v} and R^{w} independently are H, methyl or ethyl, z is 1-6, preferably 2-3 and x is 12-45, such as 20-35. Most preferably in hydroxy-containing compounds of general formula XX one or both of R^{v} and R^{w} are H and z is 2 to 3 and the number-average molecular weight determined by the value of x is between 500 and 4000 g/mol more preferably 700 to 2000 g/mol and most preferably 800 to 1600 g/mol.

A preferred amino-containing polymer to be used as P-(XH)_{z} can be described by structure XXI: 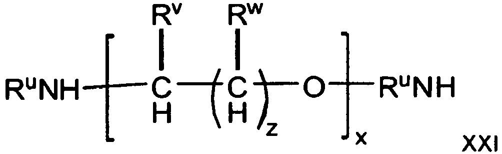 where R^{v}, R^{w}, z and x are defined as in structure XXIII, and R^{u} is H or alkyl. Those compounds lead to polyurea containing prepolymers.

While structures for the hydroxy and amino containing polymers or oligomers have been shown, alternatives for use herein include the thiol versions thereof. And of course combinations of such compounds may be used herein.

The hydroxy, amino and/or thiol containing polyalkylene ethers should be used in a molar ratio of OH, amino and/or SH groups to isocyanate groups of the one or more diisocyanates having two isocyanate groups with different reactivity in a range of 1:0.9 to 1:4.0, such as 1:1.0 to 1:2.5, for instance 1:1.85.

The integer z in P-(XH)_{z} ranges from 1 to 12, preferable 1 to 6, more preferable 2 to 4 and most preferable z is 2 or 3.

### Diisocyanates having two isocyanate groups with different reactivity D-(NCO)₂

Crucial for the present invention is to use a diisocyanate for reaction with the hydroxy, amino and/or thiol containing polymers P-(XH)_{z}, which has two isocyanate groups having different reactivity. The different reactivity is influenced especially by the spatial requirements, steric hindrances and/or electron density in the vicinity of an isocyanate group at given reaction conditions.

However, in any case of doubt, the difference in reactivity towards P-(XH)_{z} can be determined easily by the one skilled art under the general reaction conditions used to react the diisocyanate with P-(XH)_{z}. For example 900 MHz ¹³C-NMR analysis can clearly distinguish between isocyanate carbon atoms of different reactivity. A ¹³C-NMR spectrum taken from the diisocyanate candidate and compared with the reaction product between P-(XH)_{z} and die diisocyanate candidate will easily reveal a preference of the more reactive isocyanate group of the diisocyanate towards the XH groups of P-(XH)_{z}, in that the NMR signal for the carbon atom of the more reactive isocyanate group will disappear more than the carbon atom signal of the lower reactive isocyanate group. Since the NMR signal intensity is quantifiable the ratio of both reaction products - the one between P-(XH)_{z} and the more reactive isocyanate group and the one with the less reactive isocyanate group of the diisocyanate - can be determined. Preferably at least 70 % by weight of the product should be attributed to the reaction with the more reactive isocyanate group of the diisocyanate. Even more preferably at least 80 % by weight and most preferably at least 90 % by weight of the reaction product between P-(XH)_{z} and the diisocyanate having two isocyanate groups with different reactivity should be attributable to the reaction with the more reactive isocyanate group.

Another approach to determine different reactivities of isocyanate groups in a diisocyanate is to react 1 mol of diisocyanate with 1 mol of n-hexanol and to determine the ratio of the products, i.e. monourethane, diurethane and unreacted diisocyanate.

However one skilled in the art can easily use any other textbook approches to determine different reactivities.

Asymmetric diisocyanates for the purposes of this invention are aromatic, aliphatic or cycloaliphatic diisocyanates, preferably having a molecular weight of about 160 g/mol to 500 g/mol which possess NCO groups having a different reactivity.

Examples of suitable aromatic asymmetric diisocyanates are 2,4-toluene diisocyanate (2,4-TDI), naphthalene 1,8-diisocyanate (1,8-NDI) and 2,4'-methylenediphenyl diisocyanate (2,4'-MDI).

Examples of suitable cycloaliphatic asymmetric diisocyanates are 1-isocyanatomethyl-3-isocyanato-1,5,5-trimethylcyclohexane (isophorone diisocyanate, IPDI), 2-isocyanatopropylcyclohexyl isocyanate, 1-methyl-2,4-diisocyanatocyclohexane or hydrogenation products of the aforementioned aromatic diisocyanates, especially hydrogenated 2,4'-MDI or 4-methylcyclohexane-1,3-diisocyanate (H-TDI).

Examples of aliphatic asymmetric diisocyanates are 1,6-diisocyanato-2,2,4-trimethylhexane, 1,6-diisocyanato-2,4,4-trimethylhexane, 2-butyl-2-ethylpentamethylene diisocyanate and lysine diisocyanate.

Preferred asymmetric diisocyanates are 2,4-toluene diisocyanate (2,4-TDI) and 2,4'-methylenediphenyl diisocyanate (2,4'-MDI).

In the context of the invention 2,4'-methylenediphenyl diisocyanate (2,4'-MDI) comprehends a polyisocyanate having a 2,4'-MDI content of more than 95% by weight, more preferably of more than 97.5% by weight. Additionally the 2,2'-MDI content is below 0.5% by weight, more preferably below 0.25% by weight.

In the context of the invention 2,4-toluene diisocyanate (2,4-TDI) comprehends a polyisocyanate having a 2,4-TDI content of more than 95% by weight, preferably of more than 97.5% by weight, and very preferably of more than 99% by weight.

### End-capping agents E-YH

The one or more end-capping used to react with the isocyanate-terminated group of the isocyanate-terminated PP have the general formular E-YH, wherein E is an end-capping residue, selected from the group consisting of aliphatic, heteroaliphatic, araliphatic, heteroaliphatic, aromatic and heteroaromatic residues and YH is selected from NHR', OH and SH with R' being defined as above for the XH group(s) of P-(XH)_{z}.

E can be further substituted for example by reactive functional groups such as OH, primary and secondary amino, thiol, oxazoline, benzoxazine or silane groups.

Preferably E is a phenolic group. More preferable E-YH is a bisphenol such as bisphenol A, bisphenol P, bisphenol M, bisphenol F, bisphenol S, bisphenol AP, bisphenol E or bisphenol TMC, or a hydroxyphenyl ether such as p-hydroxyphenyl ether and p-hydroxyphenyl thioether, or 4,4'-dihydroxy benzophenone, 4,4'-Dihydroxydiphenyl, 2,2'-dihydroxydiphenyl, or 4,4'-cyclohexyliden diphenol, resorcinol or hydrochinon.

However E does not necessarily has to contain a reactive functional group or an aromatic residue. For example n-butyl amine can be employed as an end-capper (E = n-butyl and YH = NH₂) or cardanol (E = m-C₁₅H₃₁₋₂ₙ-phenyl, with n = 0,1,2,3 and YH = OH).

Best results in view of flexural modulus combined with high G1c values are however observed when E is a phenol group and most preferred E-YH is bisphenol A.

The end-capping agent and the isocyanate-terminated PP may be reacted at an appropriate temperature for a sufficient time to cause reaction between the isocyanate groups and the YH groups on the capping agent. Preferably, this reaction continues for a period of about 30 minutes to 4 hours, at a temperature in the range of about 60 to about 100 °C, preferably about 70 to about 90 °C, most preferably about 80 to about 90 °C. A catalyst, such as any of the condensation catalysts discussed above (e.g. dibutyltin dilaurate), may be used to enhance reaction times in preparing the PP. Of course combinations of such compounds may be used herein.

As preferably essentially all of the one or more diisocyanates having two isocyanate groups with different reactivity are reacted with the end-capping agent, an appropriate amount of end-capper is to be used to facilitate such reaction. The precise amount of course will depend on the nature, identity and amount of the remaining reactants that are used to form the adduct and as such will be left to the discretion of those persons of ordinary skill in the art.

### Epoxy Resins

In one embodiment of the present invention the inventive compositions may further comprise as component C) one or more epoxy resins, i.e. epoxy-containing compounds even though the addition of epoxy resins is not necessary. Preferably the amount of epoxy resins employed does not exceed 60 wt.-%, more preferably 40 wt.-% and most preferably 30 wt.-%. Particularly preferable are curable compositions of the present invention that are essentially free of epoxy resins. Commercially available epoxy-containing compounds for use in the curable compositions of the present invention are illustrated below.

The epoxy-containing compounds used may include multifunctional epoxy-containing compounds, such as C₁-C₂₈ alkyl-, poly-phenol glycidyl ethers; polyglycidyl ethers of pyrocatechol, resorcinol, hydroquinone, 4,4'-dihydroxydiphenyl methane (or bisphenol F, such as RE-303-S or RE-404-S available commercially from Nippon Kayuku, Japan), 4,4'-dihydroxy-3,3'-dimethyldiphenyl methane, 4,4'-dihydroxydiphenyl dimethyl methane (or bisphenol A), 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, and tris(4-hydroxyphenyl) methane; polyglycidyl ethers of transition metal complexes; chlorination and bromination products of the above-mentioned diphenols; polyglycidyl ethers of novolacs; polyglycidyl ethers of diphenols obtained by esterifying ethers of diphenols obtained by esterifying salts of an aromatic hydrocarboxylic acid with a dihaloalkane or dihalogen dialkyl ether; polyglycidyl ethers of polyphenols obtained by condensing phenols and long-chain halogen paraffins containing at least two halogen atoms; phenol novolac epoxy; cresol novolac epoxy; and combinations thereof.

Among the commercially available epoxy-containing compounds suitable for use in the present invention are polyglycidyl derivatives of phenolic compounds, such as those available under the tradenames EPON 825, EPON 826, EPON 828, EPON 1001, EPON 1007 and EPON 1009, cycloaliphatic epoxy-containing compounds such as Araldite CY179 from Huntsman or waterborne dispersions under the tradenames EPI-REZ 3510, EPI-REZ 3515, EPI-REZ 3520, EPI-REZ 3522, EPI-REZ 3540 or EPI-REZ 3546 from Hexion; DER 331, DER 332, DER 383, DER 354, and DER 542 from Dow Chemical Co.; GY285 from Huntsman, Inc.; and BREN-S from Nippon Kayaku, Japan. Other suitable epoxy-containing compounds include polyepoxides prepared from polyols and the like and polyglycidyl derivatives of phenol-formaldehyde novolacs, the latter of which are available commercially under the tradenames DEN 431, DEN 438, and DEN 439 from Dow Chemical Company and a waterborne dispersion ARALDITE PZ 323 from Huntsman.

Cresol analogs are also available commercially such as ECN 1273, ECN 1280, ECN 1285, and ECN 1299 or waterborne dispersions ARALDITE ECN 1400 from Huntsman, Inc. SU-8 and EPI-REZ 5003 are bisphenol A-type epoxy novolacs available from Hexion. Epoxy or phenoxy functional modifiers to improve adhesion, flexibility and toughness, such as the HELOXY brand epoxy modifiers 67, 71, 84, and 505. When used, the epoxy or phenoxy functional modifiers may be used in an amount of about 1:1 to about 5:1 with regard to the heat curable resin.
Of course, combinations of the different epoxy resins (epoxy-containing compounds) are also desirable for use herein.

The epoxy-containing compounds can be used in the composition of the present invention in an amount of preferably 0 to 60, more preferably 5 to 50 and most preferably 10 to 30 percent by weight based on the total weight of the curable composition.

### Optional additives

The inventive compositions may also contain curing catalysts, which are known to those skilled in the art.

Examples of curing agents generally include phenolic compounds such as phenol, bisphenol A, bisphenol F or phenol-formaldehyde resins, amines such as imidazole and imidazole derivatives, sulfonic acids such as para-toluene sulfonic acid, Lewis acids such as boron or aluminum halides and aliphatic and aromatic carboxylic acids.

When used, the curing agent, is present in an amount sufficient to cure the composition, such as about 1 to about 15 parts per hundred parts of curable composition, for instance about 3 to about 10 parts per hundred parts of curable composition.

In general, the curing temperatures of the inventive compositions are between 120 and 220 °C, such as between 150 and 190 °C, for a period of time of about 2 minutes to 5 hours, more preferably of about 60 minutes to 180 minutes. Thus, the inventive compositions can be used at relatively moderate temperatures to achieve very good productivity. The curing can if desired be conducted in two stages, for example, by interrupting the curing process or, if a curing agent is employed for elevated temperatures, by allowing the curable composition to cure partially at lower temperatures.

If desired, reactive diluents, for example styrene oxide, butyl glycidyl ether, 2,2,4-trimethylpentyl glycidyl ether, phenyl glycidyl ether, cresyl glycidyl ether or glycidyl esters of synthetic, highly branched, mainly tertiary, aliphatic monocarboxylic acids, oxazoline group containing compounds may be added to the curable compositions to reduce their viscosity.

In addition tougheners, plasticizers, extenders, microspheres, fillers and reinforcing agents, for example coal tar, bitumen, textile fibres, glass fibres, asbestos fibres, boron fibres, carbon fibres, mineral silicates, mica, powdered quartz, hydrated aluminum oxide, bentonite, wollastonite, kaolin, silica, aerogel or metal powders, for example aluminium powder or iron powder, and also pigments and dyes, such as carbon black, oxide colors and titanium dioxide, fire-retarding agents, thixotropic agents, flow control agents, such as silicones, waxes and stearates, which can, in part, also be used as mold release agents, adhesion promoters, antioxidants and light stabilizers, the particle size and distribution of many of which may be controlled to vary the physical properties and performance of the inventive compositions, may be used in the inventive compositions.

When used, fillers are used in an amount sufficient to provide the desired rheological properties. Fillers may be used in an amount up to about 50 percent by weight, such as about 5 to about 32 percent by weight, for instance about 10 to about 25 percent by weight.

The fillers may be inorganic ones, such as silicas. For instance, the silica filler may be a silica nanoparticle. The silica nanoparticle can be pre-dispersed in epoxy resins, and may be selected from those commercially available under the tradename NANOPOX, such as NANOPOX XP 0314, XP 0516, XP 0525, and XP F360 from Nano Resins, Germany. These NANOPOX products are silica nanoparticle dispersions in epoxy resins, at a level of up to about 50% by weight. These NANOPOX products are believed to have a particle size of about 5 nm to about 80 nm. NANOPOX XP 0314 is reported by the manufacturer to contain 40 weight percent of silica particles having a particle size of less than 50 nm diameter in a cycloaliphatic epoxy resin. Other kinds of fillers may also include core-shell-particles as for example disclosed in International Patent Application Publication No. WO 2007/064801 A1 (Li) the disclosure of which is incorporated herein by reference.

### Physical properties of the inventive compositions.

The curable compositions of the present invention may be cured to obtain cured products having a flexural modulus and flexural strength being the same or higher than the values for a composition not containing component B), i. e. PP, in particular in formulations that do not need to contain epoxy resins. Moreover the toughness "indicators" - K_{1C} and G_{1C} values (K_{1C} is standing for critical stress intensity factor and G_{1C} is standing for critical energy release rate) - should be increased compared to compositions not containing component B).

One aim of the present invention is to provide curable composition, which comprise after curing a flexural modulus of 2800 MPa or more, more preferably 3000 MPa or more and most preferably 3500 MPa or more and exhibit G_{1C} values above 200 J/m², more preferably above 250 J/m² and most preferably above 350 J/m² or even as high as at least about 400 J/m² or at least about 450 J/m².

As noted, the invention relates also to the use of the curable compositions in the formation of prepregs or towpregs formed from a layer or bundle of fibers infused with the inventive heat curable composition.

In this regard, the invention relates to processes for producing a prepreg or a towpreg. One such process includes the steps of (a) providing a layer or bundle of fibers; (b) providing the inventive heat curable composition; and (c) joining the heat curable composition and the layer or bundle of fibers to form a prepreg or a towpreg assembly, respectively, and exposing the resulting prepreg or towpreg assembly to elevated temperature and pressure conditions sufficient to infuse the layer or bundle of fibers with the heat curable composition to form a prepreg or towpreg, respectively.

Another such process for producing a prepreg or towpreg, includes the steps of (a) providing a layer or bundle of fibers; (b) providing the inventive heat curable composition in liquid form; (c) passing the layer or bundle of fibers through the liquid heat curable composition to infuse the layer or bundle of fibers with the heat curable composition; and (d) removing excess heat curable composition from the prepreg or towpreg assembly.

The fiber layer or bundle may be constructed from unidirectional fibers, woven fibers, chopped fibers, non-woven fibers or long, discontinuous fibers.

The fiber chosen may be selected from carbon, glass, aramid, boron, polyalkylene, quartz, polybenzimidazole, polyetheretherketone, polyphenylene sulfide, poly p-phenylene benzobisoaxazole, silicon carbide, phenolformaldehyde, phthalate and napthenoate.

The carbon is selected from polyacrylonitrile, pitch and acrylic, and the glass is selected from S glass, S2 glass, E glass, R glass, A glass, AR glass, C glass, D glass, ECR glass, glass filament, staple glass, T glass and zirconium oxide glass.

The inventive compositions (and prepregs and towpregs prepared therefrom) are particularly useful in the manufacture and assembly of composite parts for aerospace and industrial end uses, bonding of composite and metal parts, core and core-fill for sandwich structures and composite surfacing.

The inventive composition may be in the form of an adhesive, sealant or coating, in which case one or more of an adhesion promoter, a flame retardant, a filler (such as the inorganic filler noted above, or a different one), a thermoplastic additive, a reactive or non-reactive diluent, and a thixotrope may be included. In addition, the inventive compositions in adhesive form may be placed in film form, in which case a support e.g. constructed from nylon, glass, carbon, polyester, polyalkylene, quartz, polybenzimidazole, polyetheretherketone, polyphenylene sulfide, poly p-phenylene benzobisoaxazole, silicon carbide, phenolformaldehyde, phthalate and naphthenoate may be included.

### EXAMPLES

### Synthesis of reference pre-polymers

### 1.1 Synthesis of the reference pre-polymer #1 (R-PUI)

72.1 g of polytetrahydrofuran (Mₙ = 1000 g/mol) and 0.5 g of trimethylolpropane are mixed and melted at 70°C, and water is removed. To this mixture, 13.2 g of 1,6-hexamethylene diisocyanate are added while stirring. The mixture is then stirred for 40 minutes at 75°C. In a second step, to complete the reaction of the excess isocyanate groups, 16.6 g of bisphenol A and about 30 mg of dibutyltin dilaurate (DBTL) are added at 75°C, and the mixture is stirred for 2 hours at 85°C-90°C. The progress of the reaction is monitored by determining the NCO content of the mixture. The final product does not contain any remaining free NCO groups.

### 1.2 Synthesis of the reference pre-polymer #2 (R-PU II)

72.1 g of polytetrahydrofuran (Mₙ = 2000 g/mol) and 0.5 g of trimethylolpropane are mixed and melted at 70°C, and water is removed. To this mixture, 19.5 g of 4,4'-methylene diphenyl diisocyanate (4,4'-MDI) are added while stirring. The mixture is then stirred for 40 minutes at 75°C. In a second step, to complete the reaction of the excess isocyanate groups, 16.6 g of bisphenol A and about 30 mg of DBTL are added at 75°C, and the mixture is stirred for 2 hours at about 100 °C. The progress of the reaction is monitored by determining the NCO content of the mixture. The final product does not contain any remaining free NCO groups.

### 1.3 Synthesis of the reference prepolymer #3 (R-PU-III) as one-step reaction applying a molar ratio of OH:NCO of 2:1 - no capping agent is used.

140.0 g of polytetrahydrofuran (Mₙ = 1400 g/mol) are melted at 90°C, and water is removed. 8.8 g of 2,4-toluene diisocyanate and about 30 mg of DBTL are added while stirring. The mixture is stirred for 2 hours at 85°C-90°C. The progress of the reaction is monitored by determining the NCO content of the mixture. The final product does not contain any remaining free NCO groups.

### 1.4 Synthesis of the reference prepolymer #4 (R-PU-IV) as one-step reaction applying a molar ratio of OH:NCO of 2:1 - no capping agent is used.

140.0 g of polytetrahydrofuran (Mₙ = 1400 g/mol) are melted at 90°C, and water is removed. 12.5 g of 2,4-MDI and about 30 mg of DBTL are added while stirring. The mixture is stirred for 2 hours at 85°C-90°C. The progress of the reaction is monitored by determining the NCO content of the mixture. The final product does not contain any remaining free NCO groups.

### Synthesis of the toughening additives of the present invention

### 1.5 Synthesis of the pre-polymer #1 (PUI) using PTHF 1000

72.6 g of polytetrahydrofuran (Mₙ = 1000 g/mol) and 1.0 g of trimethylolpropane are mixed and melted at 70°C, and water is removed. To this mixture, 27.1 g of 2,4-tolulene diisocyanate (2,4-TDI) are added while stirring. The mixture is then stirred for 40 minutes at 75°C. In a second step, to complete the reaction of the excess isocyanate groups, 32.2 g of bisphenol A and about 30 mg of DBTL are added at 75°C, and the mixture is stirred for 2 hours at about 85°C-90 °C. The progress of the reaction is monitored by determining the NCO content of the mixture. The final product does not contain any remaining free NCO groups.

### 1.6 Synthesis of the pre-polymer #2 (PU II) using PTHF 1400

101.7 g of polytetrahydrofuran (Mₙ = 1400 g/mol) and 1.0 g of trimethylolpropane are mixed and melted at 70°C, and water is removed. To this mixture, 27.1 g of 2,4-toluene diisocyanate are added while stirring. The mixture is then stirred for 40 minutes at 75°C. In a second step, to complete the reaction of the excess isocyanate groups, 33.2 g of bisphenol A and about 30 mg of DBTL are added at 75°C, and the mixture is stirred for 2 hours at 85°C-90°C. The progress of the reaction is monitored by determining the NCO content of the mixture. The final product does not contain any remaining free NCO groups.

### 1.7 Synthesis of the pre-polymer #3 (PU III) using PTHF 1000/2000 (1:1)

48.4 g of polytetrahydrofuran (Mₙ = 1000 g/mol), 48.4 g of polytetrahydrofuran (Mₙ = 2000 g/mol), and 1.0 g of trimethylolpropane are mixed and melted at 70°C, and water is removed. To this mixture, 27.1 g of 2,4-toluene diisocyanate are added while stirring. The mixture is then stirred for 40 minutes at 75°C. In a second step, to complete the reaction of the excess isocyanate groups, 33.2 g of bisphenol A and about 30 mg of DBTL are added at 75°C, and the mixture is stirred for 2 hours at 85°C-90°C. The progress of the reaction is monitored by determining the NCO content of the mixture. The final product does not contain any remaining free NCO groups.

### 1.8 Synthesis of the pre-polymer #4 (PU IV) using PTHF 1400/2000 (1:1)

101.7 g of polytetrahydrofuran (Mₙ = 1400 g/mol), 144.0 g of polytetrahydrofuran (Mₙ = 2000 g/mol), and 2.0 g of trimethylolpropane are mixed and melted at 70°C, and water is removed. To this mixture, 54.2 g of 2,4-toluene diisocyanate are added while stirring. The mixture is then stirred for 40 minutes at 75°C. In a second step, to complete the reaction of the excess isocyanate groups, 66.4 g of bisphenol A and about 30 mg of DBTL are added at 75°C, and the mixture is stirred for 2 hours at 85°C-90°C. The progress of the reaction is monitored by determining the NCO content of the mixture. The final product does not contain any remaining free NCO groups.

### 1.9 Synthesis of the pre-polymer #5 (PU V) using PTHF 1000/2000 (2:3)

29.0 g of polytetrahydrofuran (Mₙ = 1000 g/mol), 87.2 g of polytetrahydrofuran (Mₙ = 2000 g/mol), and 1.0 g of trimethylolpropane are mixed and melted at 70°C, and water is removed. To this mixture, 27.1 g of 2,4-toluene diisocyanate are added while stirring. The mixture is then stirred for 40 minutes at 75°C. In a second step, to complete the reaction of the excess isocyanate groups, 33.2 g of bisphenol A and about 30 mg of DBTL are added at 75°C, and the mixture is stirred for 2 hours at 85°C-90°C. The progress of the reaction is monitored by determining the NCO content of the mixture. The final product does not contain any remaining free NCO groups.

### 1.10 Synthesis of the pre-polymer #7 (PU VII) using PTHF 1400 and 2,4'-MDI

101.6 g of polytetrahydrofuran (Mₙ = 1400 g/mol) and 1.0 g of trimethylolpropane are mixed and melted at 70°C, and water is removed. To this mixture, 39.0 g of 2,4-methylenediphenyldiisocyanate (2,4-MDI) are added while stirring. The mixture is then stirred for 40 minutes at 75°C. In a second step, to complete the reaction of the excess isocyanate groups, 32.9 g of bisphenol A and about 30 mg of DBTL are added at 75°C, and the mixture is stirred for 2 hours at about 85°C-90 °C. The progress of the reaction is monitored by determining the NCO content of the mixture. The final product does not contain any remaining free NCO groups.

### 1.11 Synthesis of the pre-polymer #8 (PU VIII) using PPG 1000

77.5 g of polypropyleneglycol (Mₙ = 1000 g/mol) and 1.0 g of trimethylolpropane are mixed and melted at 70°C, and water is removed. To this mixture, 27.1 g of 2,4-tolulene diisocyanate (2,4-TDI) are added while stirring. The mixture is then stirred for 40 minutes at 75°C. In a second step, to complete the reaction of the excess isocyanate groups, 33.2 g of bisphenol A and about 30 mg of DBTL are added at 75°C, and the mixture is stirred for 2 hours at about 85°C-90 °C. The progress of the reaction is monitored by determining the NCO content of the mixture. The final product does not contain any remaining free NCO groups.

### 1.12 Synthesis of the pre-polymer #9 (PU IX) using 2 % TMP

101.7 g of polytetrahydrofuran (Mₙ = 1400 g/mol) and 2.0 g of trimethylolpropane are mixed and melted at 70°C, and water is removed. To this mixture, 29.0 g of 2,4-tolulene diisocyanate (2,4-TDI) are added while stirring. The mixture is then stirred for 40 minutes at 75°C. In a second step, to complete the reaction of the excess isocyanate groups, 33.2 g of bisphenol A and about 30 mg of DBTL are added at 75°C, and the mixture is stirred for 2 hours at about 85°C-90 °C. The progress of the reaction is monitored by determining the NCO content of the mixture. The final product does not contain any remaining free NCO groups.

### 1.13 Synthesis of the pre-polymer #10 (PU X) using n-butyl amine as capping agent

101.7 g of polytetrahydrofuran (Mₙ = 1400 g/mol) and 1.0 g of trimethylolpropane are mixed and melted at 70°C, and water is removed. To this mixture, 27.1 g of 2,4-tolulene diisocyanate (2,4-TDI) are added while stirring. The mixture is then stirred for 40 minutes at 75°C. In a second step, to complete the reaction of the excess isocyanate groups, 10.6 g of n-butyl amine and about 30 mg of DBTL are added at 75°C, and the mixture is stirred for 30 minutes at about 85°C-90 °C. The progress of the reaction is monitored by determining the NCO content of the mixture. The final product does not contain any remaining free NCO groups.

### 1.14 Synthesis of the pre-polymer #11 (PU XI) using n-butyl amine/Bisphenol A (1/1 mol/mol) as capping agent

101.7 g of polytetrahydrofuran (Mₙ = 1400 g/mol) and 1.0 g of trimethylolpropane are mixed and melted at 70°C, and water is removed. To this mixture, 27.1 g of 2,4-tolulene diisocyanate (2,4-TDI) are added while stirring. The mixture is then stirred for 40 minutes at 75°C. In a second step, to complete the reaction of the excess isocyanate groups, 5.3 g of n-butyl amine, 16.4 g Bisphenol A and about 30 mg of DBTL are added at 75°C, and the mixture is stirred for 2 hours at about 85°C-90 °C. The progress of the reaction is monitored by determining the NCO content of the mixture. The final product does not contain any remaining free NCO groups.

### 1.15 Synthesis of the pre-polymer #12 (PU XII) using 3-aminopropanol as capping agent

101.7 g of polytetrahydrofuran (Mₙ = 1400 g/mol) and 1.0 g of trimethylolpropane are mixed and melted at 70°C, and water is removed. To this mixture, 27.1 g of 2,4-tolulene diisocyanate (2,4-TDI) are added while stirring. The mixture is then stirred for 40 minutes at 75°C. In a second step, to complete the reaction of the excess isocyanate groups, 11.0 g of 3-aminopropanol and about 30 mg of DBTL are added at 75°C, and the mixture is stirred for 30 minutes at about 85°C-90 °C. The progress of the reaction is monitored by determining the NCO content of the mixture. The final product does not contain any remaining free NCO groups.

### 1.16 Synthesis of the pre-polymer #13 (PU XIII) using resorcinol as capping agent

101.7 g of polytetrahydrofuran (Mₙ = 1400 g/mol) and 1.0 g of trimethylolpropane are mixed and melted at 70°C, and water is removed. To this mixture, 27.1 g of 2,4-toluene diisocyanate are added while stirring. The mixture is then stirred for 40 minutes at 75°C. In a second step, to complete the reaction of the excess isocyanate groups, 16.1 g of resorcinol and about 30 mg of DBTL are added at 75°C, and the mixture is stirred for 2 hours at 85°C-90°C. The progress of the reaction is monitored by determining the NCO content of the mixture. The final product does not contain any remaining free NCO groups.

### 1.17 Synthesis of the pre-polymer #14 (PU XIV) using cardanol as capping agent

101.7 g of polytetrahydrofuran (Mₙ = 1400 g/mol) and 1.0 g of trimethylolpropane are mixed and melted at 70°C, and water is removed. To this mixture, 27.1 g of 2,4-toluene diisocyanate are added while stirring. The mixture is then stirred for 40 minutes at 75°C. In a second step, to complete the reaction of the excess isocyanate groups, 43.3 g of cardanol and about 30 mg of DBTL are added at 75°C, and the mixture is stirred for 2 hours at 85°C-90°C. The progress of the reaction is monitored by determining the NCO content of the mixture. The final product does not contain any remaining free NCO groups.

### 1.18 Synthesis of pre-polymer #15 (PU XV) without tri-functional TMP

117.3 g of polytetrahydrofuran (Mₙ = 1400 g/mol) are melted at 70°C, and water is removed. 27.1 g of 2,4-toluene diisocyanate are added while stirring. The mixture is then stirred for 40 minutes at 75 °C. In a second step, to complete the reaction of the excess isocyanate groups, 33.2 g of Bisphenol A and about 30 mg DBTL are added at 75°C, and the mixture is stirred for 2 hours at 85°C-90°C. The progress of the reaction is monitored by determining the NCO content of the mixture. The final product does not contain any remaining free NCO groups.

### 1.19 Synthesis of pre-polymer #16 (PU XVI) applying in the first step of the synthesis a molar ratio of OH:NCO = 1:1.7

101.7 g of polytetrahydrofuran (Mₙ = 1400 g/mol) and 1.0 g of trimethylolpropane are mixed and melted at 70°C, and water is removed. To this mixture, 24.8 g of 2,4-toluene diisocyanate are added while stirring. The mixture is then stirred for 40 minutes at 75 °C. In a second step, to complete the reaction of the excess isocyanate groups, 27.1 g of Bisphenol A and about 30 mg DBTL are added at 75°C, and the mixture is stirred for 2 hours at 85°C-90°C. The progress of the reaction is monitored by determining the NCO content of the mixture. The final product does not contain any remaining free NCO groups.

### 1.120 Synthesis of pre-polymer #17 (PU XVII) applying in the first step of the synthesis a molar ratio of OH:NCO = 1:1.5

101.7 g of polytetrahydrofuran (Mₙ = 1400 g/mol) and 1.0 g of trimethylolpropane are mixed and melted at 70°C, and water is removed. To this mixture, 21.85 g of 2,4-toluene diisocyanate are added while stirring. The mixture is then stirred for 40 minutes at 75 °C. In a second step, to complete the reaction of the excess isocyanate groups, 19.4 g of Bisphenol A and about 30 mg DBTL are added at 75°C, and the mixture is stirred for 2 hours at 85°C-90°C. The progress of the reaction is monitored by determining the NCO content of the mixture. The final product does not contain any remaining free NCO groups.

### Preparation/evaluation of inventive compositions

Here curable compositions including MDA-phenyl benzoxazine and N-phenyl benzoxazine as a N-arylated benzoxazine matrix resin are used.

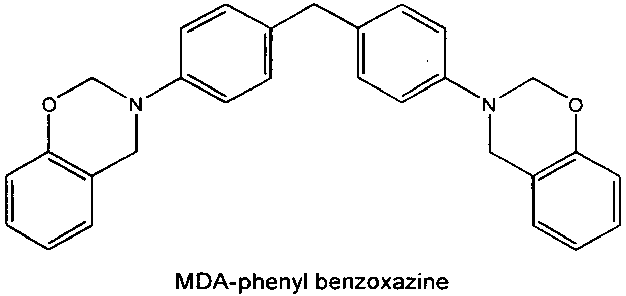

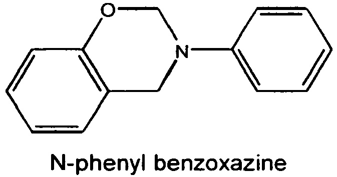

Additionally for Sample 26 a cycloaliphatic diepoxide available under the tradename Cyracure UVR 6110 from Dow Chemical Company (in the following CY) is used.

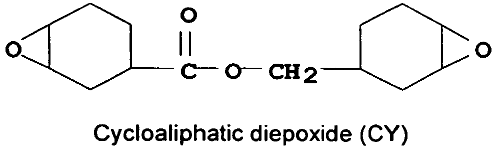

### Sample 1 (as a control sample) consists of MDA-phenyl benzoxazine alone.

To test the above-described pre-polymers for their toughening properties mixtures of MDA-phenyl benzoxazine with different amounts of the pre-polymers have been prepared by simply mixing the benzoxazine with the respective pre-polymer and applying a vacuum (< 1 mbar) at 105 to 115 °C for about 15 to 30 minutes while stirring, until the pre-polymer is homogenously dissolved in the benzoxazine. The thus prepared formulation was stored in a sealed container at room temperature.

Samples 2 and 3 are control samples comprising 80 % by weight of MDA-phenyl benzoxazine and 20 % by weight of pre-polymers prepared by use of symmetric diisocyanates, i.e. having two isocyanate groups of identical reactivity. The pre-polymer used in Sample 2 is R-PU I and the pre-polymer used in Sample 3 is R-PU II.

Samples according to the invention are Samples 4 to 18. Sample 4 is an 80/20 (w/w) mixture of MDA-phenyl benzoxazine and PU I. Samples 5, 6 and 7 are 90/10 (w/w), 80/20 (w/w) and 70/30 (w/w) mixtures of MDA-phenyl benzoxazine and PU II. Samples 8 to 18 contain 80 % by weight of MDA-phenyl benzoxazine and 20 % by weight of a pre-polymer toughener. The pre-polymer toughener of Sample 8 is PU III, of Sample 9 is PU IV, of Sample 10 is PU V, of Sample 11 is PU VII, of Sample 12 is PU VIII, of Sample 13 is PU IX, of Sample 14 is PU X, of Sample 15 is PU XI, of Sample 16 is PU XII, of Sample 17 is PU XIII and of Sample 18 is PU XIV.

Samples 19 to 21 contain 80 % by weight of MDA-phenyl benzoxazine and 20 % by weight of a pre-polymer toughener. The pre-polymer toughener of Sample 19 is PU XV, of Sample 20 is PU XVI and of Sample 21 is PU XVII.

Samples 22 and 23 contain 80 % by weight of MDA-phenyl benzoxazine and 20 % by weight of a reference pre-polymer toughener. The pre-polymer toughener of Sample 22 is R-PU III and of Sample 23 is R-PU IV.

Samples 24 describes an 80/20 (w/w) mixtures of a benzoxazine resin mixture and pre-polymer toughener PU II. The benzoxazine resin mixture is 60/40 (w/w) of MDA-phenyl benzoxazine and N-phenyl benzoxazine.

Samples 25 describes an 80/20 (w/w) mixture of a benzoxazine resin mixture and pre-polymer toughener PU IV. The benzoxazine resin mixture is 60/40 (w/w) of MDA-phenyl benzoxazine and N-phenyl benzoxazine.

Sample 26 describes a 70/20/10 (w/w/w) mixture of a benzoxazine resin mixture, cycloaliphatic diepoxide CY and pre-polymer toughener PU II. The benzoxazine resin mixture is 60/40 (w/w) of MDA-phenyl benzoxazine and N-phenyl benzoxazine.

The curable compositions were cured in sealed containers in a circulating air drying oven at 180 °C for 3 hours. Subsequently the Samples were taken out of the drying oven, removed from the container and cooled to room temperature.

The cured Samples were characterized using the following analytical methods: The glass transition temperatures were obtained by dynamic-mechanical-thermal analysis (DMTA) of Samples cut to a size of 35 mm x 10 mm x 3.2 mm. The Samples were heated from 25 °C with a heating rate of 10 °C/min to a final temperature of 250 °C. The glass transition temperatures were obtained from the maximum value of the loss modulus vs. temperature diagrams. Flexural strength and flexural modulus were determined according to ASTM D790 using samples of a size of 90 mm x 12.7 mm x 3.2 mm, span = 50.8 mm, speed = 1.27 mm/min. K1c and G1c values were determined according to ASTM D5045-96 using so-called "single etch notch bending (SENB)" test specimens sized 56 mm x 12.7 mm x 3.2 mm.

**Table 1**

| Sample | T_{g} [°C] | Flexural Strength [MPa] | Flexural Modulus [MPa] | K1c [MPa m^{0.5}] | G1c [J/m²] | Homogenicity |
|---|---|---|---|---|---|---|
| 1 | 200 | 170 | 4650 | 0.78 | 115 | N/A |
| 2 | n.d. | n.d. | n.d. | n.d. | n.d. | No |
| 3 | n.d. | n.d. | n.d. | n.d. | n.d. | No |
| 4 | 182 | 145 | 3900 | 1.01 | 230 | Yes |
| 5 | 195 | 150 | 3700 | 1.03 | 252 | Yes |
| 6 | 193 | 130 | 4000 | 1.22 | 327 | Yes |
| 7 | 186 | 105 | 2800 | 1.35 | 571 | Yes |
| 8 | 195 | 130 | 3950 | 0.99 | 218 | Yes |
| 9 | 199 | 135 | 3500 | 1.27 | 404 | Yes |
| 10 | 192 | 70 | 3400 | 1.18 | 359 | Yes |
| 11 | n.d. | 135 | 3300 | 1.29 | 442 | Yes |
| 12 | n.d. | 125 | 3550 | 1.00 | 247 | Yes |
| 13 | n.d. | 130 | 3700 | 1.30 | 401 | Yes |
| 14 | n.d. | 130 | 3400 | 1.17 | 353 | Yes |
| 15 | n.d. | 120 | 3000 | 1.13 | 373 | Yes |
| 16 | n.d. | 115 | 2800 | 1.18 | 436 | Yes |
| 17 | n.d. | 110 | 3050 | 1.28 | 471 | Yes |
| 18 | 189 | 125 | 3100 | 1.25 | 421 | Yes |
| 19 | n.d. | 130 | 3100 | 1.21 | 414 | Yes |
| 20 | 192 | 120 | 3350 | 1.07 | 300 | Yes |
| 21 | n.d. | 130 | 3250 | 1.23 | 408 | Yes |
| 22 | n.d. | n.d. | n.d. | n.d. | n.d. | No |
| 23 | n.d. | n.d. | n.d. | n.d. | n.d. | No |
| 24 | 153 | 130 | 3250 | 1.52 | 625 | Yes |
| 25 | 152 | 135 | 3700 | 1.63 | 635 | Yes |
| 26 | 186 | 160 | 3950 | 1.00 | 210 | Yes |

Samples 2 and 3 are not compatible with the N-arylated benzoxazine, as noted by a lack of homogeneity. Curing of those samples leads to products having sticky surfaces.

However, Samples based on pre-polymers as tougheners, where the pre-polymers were synthesized using diisocyanates having two isocyanate groups with different reactivity are homogeneous and do not exhibit tacky surfaces. Moreover those Samples 4 to 18 show a significant increase of G1c values indicating an increased impact strength. Surprisingly there is no or almost no effect on the glass transition temperature. Furthermore the decrease in flexural strength and flexural modulus is very low.

Comparing Samples 5 to 7 it is found that an increase of pre-polymer toughener content to 30 % by weight leads to cured products exhibiting a very high G1c value. However, flexural strength and in particular flexural modulus are significantly decreased.

A comparison of Samples 6, 14 and 15 show the influence of the end-capping molecule used to end-cap free isocyanate groups in the synthesis of the pre-polymers. Whereas Sample 6 makes use of bisphenol A as sole end-capper in the pre-polymer synthesis, for the preparation of the pre-polymer of Sample 14 a 50/50 mixture (molar ratio 1:1) of bisphenol A and n-butylamine was used. In Sample 15, the pre-polymer used was only end-capped with n-butylamine. The biggest influence is seen on the flexural modulus, which is decreased when bisphenol A is replaced by n-butylamine. However n-butylamine capped pre-polymers are still suitable, albeit not being preferred. Therefore phenolic end-cappers are preferred in the present invention. This is even more true for Sample 16, where a pre-polymer is used, which is end-capped with a 3-aminopropanol, still exhibiting a very good G1 c value, but a relatively poor flexural modulus.

Samples 22 and 23 are not compatible with the N-arylated benzoxazine, as noted by a lack of homogeneity.

Samples 24 to 26 show that the cured products of N-arylated benzoxazine resin mixtures and mixtures of N-arylated benzoxazine resins and an epoxy resin, each mixture comprising a pre-polymer toughener of the present invention exhibit very high G1 c values.

## Claims

1. A curable composition comprising:
A) an N-arylated benzoxazine component, and
B) a prepolymer of the following general structure:
P-(X-CO-NH-D-NH-CO-Y-E)_{z}
wherein
P is a z-valent residue of an oligomer or polymer,
X and Y independently are selected from the group consisting of NR, O and S, wherein R' is hydrogen or a residue selected from the group consisting of aliphatic, heteroaliphatic, araliphatic, heteroaraliphatic, aromatic and heteroaromatic residues,
D is a divalent residue of a diisocyanate comprising two isocyanate groups having different reactivity, from which the two isocyanate groups with different reactivity have been removed to form two binding sites (valences),
E is a end-capping residue, selected from the group consisting of aliphatic, heteroaliphatic, araliphatic, heteroaraliphatic, aromatic and heteroaromatic residues, and
z is an integer of 1 to 12.

2. The curable composition according to claim 1, wherein P is selected from the group consisting of polyether residues and polyester residues.

3. The curable composition according to claim 1 and/or 2, wherein X and Y independently are NH and/or O.

4. The curable composition according to any of claims 1 to 3, wherein D is a residue obtained by removing the two isocyanate groups of a diisocyanate selected from the group consisting of 2,4-toluene diisocyanate (2,4-TDI), naphthalene 1,8-diisocyanate (1,8-NDI), 2,4'-methylenediphenyl diisocyanate (2,4'-MDI), 1-isocyanatomethyl-3-isocyanato-1,5,5-trimethylcyclohexane (isophorone diisocyanate, IPDI), 2-isocyanatopropylcyclohexyl isocyanate, 1-methyl-2,4-diisocyanatocyclohexane, hydrogenation products of the aforementioned aromatic diisocyanates, 1,6-diisocyanato2,2,4-trimethylhexane, 1,6-diisocyanato-2,4,4-trimethylhexane, 2-butyl-2-ethylpentamethylene diisocyanate and lysine diisocyanate.

5. The curable composition according to any of claims 1 to 4, wherein E is an aromatic residue comprising phenolic hydroxyl groups.

6. The curable composition according to any of claims 1 to 5, wherein z is an integer of 2 to 6.

7. The curable composition according to any of claims 1 to 6, where in P is a polyether, X and Y are O, D is a residue obtained by removing the two isocyanate groups of 2,4-toluene diisocyanate or 2,4'-methylenediphenyl diisocyanate, E is an aromatic residue comprising a phenolic hydroxyl group, and z = 2 or 3.

8. The curable composition according to any of claims 1 to 7, wherein P is a three-valent residue (z=3) derived from a trimethylolpropane.

9. The composition according to any of claims 1 to 8, wherein the N-arylated benzoxazine component comprises one or more of 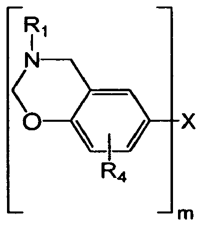 where m is 1-4, X is selected from a direct bond (when m is 2), alkyl (when m is 1), alkylene (when m is 2-4), carbonyl (when m is 2), oxygen (when m is 2), thiol (when m is 1), sulfur (when m is 2), sulfoxide (when m is 2), and sulfone (when m is 2), R₁ is aryl, and R₄ is selected from hydrogen, halogen, alkyl, alkenyl, or R₄ is a divalent residue creating a naphthoxazine residue out of the benzoxazine structure, or 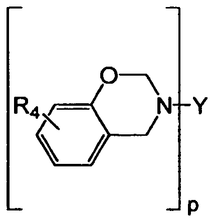 wherein p is 2, Y is selected from the group consisting of biphenyl (when p is 2), diphenyl methane (when p is 2), diphenyl isopropane (when p is 2), diphenyl sulfide (when p is 2), diphenyl sulfoxide (when p is 2), diphenyl sulfone (when p is 2), and diphenyl ketone (when p is 2), and R₄ is selected from the group consisting of hydrogen, halogen, alkyl and alkenyl.

10. The composition according to any of claims 1 to 9, wherein the N-arylated benzoxazine component is present in an amount in the range of about 50 to about 95 percent by weight, based on the total weight of the composition.

11. The composition according to any of claims 1 to 10, further containing an epoxy resin component.

12. A cured reaction product of the composition according to any of claims 1 to 11.

13. The cured reaction product according to claim 12 comprising a layer or bundle of fibers infused with the composition of any of claims 1 to 11 before curing.

14. A process for producing the cured reaction product of claim 13, steps of which comprise:
A) providing a layer or bundle of fibers;
B) providing the composition according to any of claims 1 to 11;
C) joining the composition and the layer or bundle of fibers to form an assembly,
D) optionally removing excess heat curable composition from the assembly exposing the resulting assembly to elevated temperature and pressure conditions sufficient to infuse the layer or bundle of fibers with the heat curable composition to form the cured reaction product.

15. An adhesive, sealant or coating composition comprising or consisting of the composition according to any of claims 1 to 11.

## Patentansprüche

1. Härtbare Zusammensetzung, umfassend:
A) eine N-arylierte Benzoxazin-Komponente, und
B) ein Präpolymer mit der folgenden allgemeinen Struktur:
P-(X-CO-NH-D-NH-CO-Y-E)_{z}
wobei
P ein z-bindiger Rest eines Oligomers oder Polymers ist,
X und Y unabhängig voneinander aus der Gruppe ausgewählt sind, die aus NR', O und S besteht, wobei R' für Wasserstoff oder einen Rest steht, der aus der Gruppe ausgewählt ist, welche aus aliphatischen, heteroaliphatischen, araliphatischen, heteroaraliphatischen, aromatischen und heteroaromatischen Resten besteht,
D ein zweibindiger Rest eines Diisocyanats ist, das zwei Isocyanatgruppen von unterschiedlicher Reaktivität umfasst, wobei die beiden Isocyanatgruppen von unterschiedlichen Reaktivität entfernt wurden, um Bindungsstellen (Valenzen) zu schaffen.
E ein Rest ist, der den endständigen Abschluss bildet und aus der Gruppe ausgewählt ist, die aus aliphatischen, heteroaliphatischen, araliphatischen, heteroaraliphatischen, aromatischen und heteroaromatischen Resten besteht, und
z eine ganze Zahl von 1 bis 12 ist.

2. Härtbare Zusammensetzung nach Anspruch 1, wobei P aus der Gruppe ausgewählt ist, die aus Polyetherresten und Polyesterresten besteht.

3. Härtbare Zusammensetzung nach Anspruch 1 und/oder 2, wobei X und Y unabhängig voneinander für NH und/oder O stehen.

4. Härtbare Zusammensetzung nach einem beliebigen der Ansprüche 1 bis 3, wobei D für einen Rest steht, der erhalten wird, wenn die beiden Isocyanatgruppen eines Diisocyanats entfernt werden, das aus der Gruppe ausgewählt ist, welche aus 2,4-Toluoldiisocyanat (2,4-TDI), Naphthalin-1,8-diisocyanat (1,8-NDI), 2,4'-Methylendiphenyldiisocyanat (2,4'-MDI), 1-Isocyanatomethyl-3-isocyanato-1,5,5-trimethylcyclohexan (Isophorondiisocyanat, IPDI), 2-Isocyanatopropylcyclohexylisocyanat, 1-Methyl-2,4-diisocyanatocyclohexan, Hydrierungsprodukten der vorstehend genannten aromatischen Diisocyanate, 1,6-Diisocyanato-2,2,4-trimethylhexan, 1,6-Diisocyanato-2,4,4-trimethylhexan, 2-Butyl-2-ethylpentamethylendiisocyanat und Lysindiisocyanat besteht.

5. Härtbare Zusammensetzung nach einem beliebigen der Ansprüche 1 bis 4, wobei E für einen aromatischen Rest steht, der phenolische Hydroxylgruppen umfasst.

6. Härtbare Zusammensetzung nach einem beliebigen der Ansprüche 1 bis 5, wobei z ist eine ganze Zahl von 2 bis 6 ist.

7. Härtbare Zusammensetzung nach einem beliebigen der Ansprüche 1 bis 6, wobei P für einen Polyether steht, X und Y gleich O sind, D für einen Rest steht, der erhalten wird, indem die beiden Isocyanatgruppen von 2,4-Toluoldiisocyanat oder 2,4'-Methylendiphenyldiisocyanat entfernt werden, E ein aromatischer Rest ist, der eine phenolische Hydroxylgruppe umfasst, und z = 2 oder 3 ist.

8. Härtbare Zusammensetzung nach einem beliebigen der Ansprüche 1 bis 7, wobei P für einen dreibindigen Rest (z=3) steht, der sich von einem Trimethylolpropan ableitet.

9. Härtbare Zusammensetzung nach einem beliebigen der Ansprüche 1 bis 8, wobei die N-arylierte Benzoxazin-Komponente eine oder mehrere der folgenden Struktur umfasst, 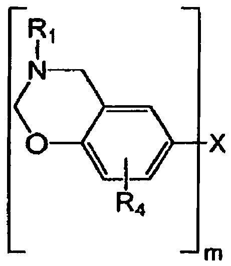 wobei m gleich 1 bis 4 ist, X aus einer direkten Bindung (wenn m gleich 2 ist), Alkyl (wenn m = 1 ist), Alkylen (wenn m = 2 bis 4 ist), Carbonyl (wenn m gleich 2 ist), Sauerstoff (wenn m = 2 ist), Thiol (wenn m = 1 ist), Schwefel (wenn m gleich 2 ist), Sulfoxid (wenn m gleich 2 ist) und Sulfon (wenn m gleich 2 ist) ausgewählt ist, R₁ Aryl ist, und R₄ aus Wasserstoff, Halogen, Alkyl, Alkenyl ausgewählt ist, oder R₄ ein zweibindiger Rest ist, der die Benzoxazin-Struktur in einen Naphthoxazin-Rest umwandelt, oder folgender Art 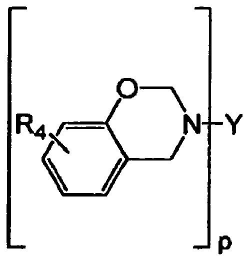 umfasst, wobei p gleich 2 ist, Y aus der Gruppe ausgewählt ist, die aus Biphenyl (wenn p gleich 2 ist), Diphenylmethan (wenn p gleich 2 ist), Diphenylisopropan (wenn p gleich 2 ist), Diphenylsulfid (wenn p gleich 2 ist), Diphenylsulfoxid (wenn p gleich 2 ist), Diphenylsulfon (wenn p gleich 2 ist) und Diphenylketon (wenn p gleich 2 ist) besteht, und R₄ aus der Gruppe ausgewählt ist, die aus Wasserstoff, Halogen, Alkyl und Alkenyl
besteht.

10. Zusammensetzung nach einem beliebigen der Ansprüche 1 bis 9, wobei die N-arylierte Benzoxazin-Komponente in einer Menge vorliegt, die im Bereich von ungefähr 50 bis ungefähr 95 Gewichtsprozent liegt, bezogen auf das Gesamtgewicht der Zusammensetzung.

11. Zusammensetzung nach einem beliebigen der Ansprüche 1 bis 10, die weiterhin eine Epoxidharz-Komponente enthält.

12. Gehärtetes Reaktionsprodukt der Zusammensetzung nach einem beliebigen der Ansprüche 1 bis 11.

13. Gehärtetes Reaktionsprodukt nach Anspruch 12, das eine Schicht oder ein Bündel aus Fasern umfasst, welche(s) vor der Härtung mit der Zusammensetzung nach einem beliebigen der Ansprüche 1 bis 11 getränkt wurde.

14. Verfahren zur Herstellung des gehärteten Reaktionsproduktes nach Anspruch 13, dessen Schritte Folgendes umfassen:
A) Bereitstellen einer Schicht oder eines Bündels aus Fasern;
B) Bereitstellen der Zusammensetzung nach einem beliebigen der Ansprüche 1 bis 11;
C) Zusammenbringen der Zusammensetzung und der Schicht oder des Bündels aus Fasern, um eine Anordnung zu bilden,
D) möglicherweise Entfernen eines Überschusses an wärmehärtbarer Zusammensetzung aus der Anordnung
Einwirkenlassen von Bedingungen erhöhter Temperatur und erhöhten Drucks auf die erhaltene Anordnung, wobei diese ausreichen, um die Schicht oder das Bündel aus Fasern mit der wärmehärtbaren Zusammensetzung zu tränken und das gehärtete Reaktionsprodukt zu bilden.

15. Kleber-, Dichtungs- oder Beschichtungszusammensetzung, welche die Zusammensetzung nach einem beliebigen der Ansprüche 1 bis 11 umfasst oder aus dieser besteht.

## Revendications

1. Composition durcissable comprenant :
A) un composant benzoxazine N-arylée, et
B) un prépolymère de la structure générale suivante :
P-(X-CO-NH-D-NH-CO-Y-E)_{z}
dans laquelle
P est un résidu de valence z d'un oligomère ou d'un polymère,
X et Y sont choisis indépendamment dans le groupe constitué par NR', O et S, dans lequel R' est un atome d'hydrogène ou un résidu choisi dans le groupe constitué par les résidus aliphatiques, hétéroaliphatiques, araliphatiques, hétéroaraliphatiques, aromatiques et hétéroaromatiques,
D est un résidu divalent d'un diisocyanate comprenant deux groupes isocyanate ayant une réactivité différente, à partir duquel les deux groupes isocyanate avec une réactivité différente ont été éliminés pour former deux sites de liaison (valences),
E est un résidu de coiffage d'extrémité, choisi dans le groupe constitué par les résidus aliphatiques, hétéroaliphatiques, araliphatiques, hétéroaraliphatiques, aromatiques et hétéroaromatiques, et
z est un nombre entier de 1 à 12.

2. Composition durcissable selon la revendication 1, dans laquelle P est choisi dans le groupe constitué par les résidus de polyéther et les résidus de polyester.

3. Composition durcissable selon la revendication 1 et/ou 2, dans laquelle X et Y sont indépendamment un groupe NH et/ou O.

4. Composition durcissable selon l'une quelconque des revendications 1 à 3, dans laquelle D est un résidu obtenu par l'élimination des deux groupes isocyanate d'un diisocyanate choisi dans le groupe constitué par le diisocyanate de 2,4-toluène (2,4-TDI), le 1,8-diisocyanate de naphtalène (1,8-NDI), le diisocyanate de 2,4'-méthylènediphényle (2,4'-MDI), le 1-isocyanatométhyl-3-isocyanato-1,5,5-triméthylcyclohexane (diisocyanate d'isophorone, IPDI), le 2-isocyanatopropylcyclohexylisocyanate, le 1-méthyl-2,4-diisocyanatocyclohexane, les produits d'hydrogénation des diisocyanates aromatiques précités, le 1,6-diisocyanato2,2,4-triméthylhexane, le 1,6-diisocyanato-2,4,4-triméthylhexane, le diisocyanate de 2-butyl-2-éthylpentaméthylène et le diisocyanate de lysine.

5. Composition durcissable selon l'une quelconque des revendications 1 à 4, dans laquelle E est un résidu aromatique comprenant des groupes hydroxyles phénoliques.

6. Composition durcissable selon l'une quelconque des revendications 1 à 5, dans laquelle z est un nombre entier de 2 à 6.

7. Composition durcissable selon l'une quelconque des revendications 1 à 6, dans laquelle P est un polyéther, X et Y sont O, D est un résidu obtenu par l'élimination des deux groupes isocyanate du diisocyanate de 2,4-toluène ou du diisocyanate de 2,4'-méthylènediphényle, E est un résidu aromatique comprenant un groupe hydroxyle phénolique, et z = 2 ou 3.

8. Composition durcissable selon l'une quelconque des revendications 1 à 7, dans laquelle P est un résidu trivalent (z = 3) dérivé d'un triméthylolpropane.

9. Composition selon l'une quelconque des revendications 1 à 8, dans laquelle le composant benzoxazine N-arylée comprend un ou plusieurs parmi 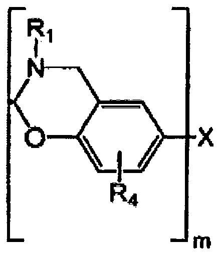 où m vaut 1 à 4, X est choisi parmi une liaison directe (lorsque m vaut 2), un groupe alkyle (lorsque m vaut 1), un groupe alkylène (lorsque m vaut 2 à 4), un groupe carbonyle (lorsque m vaut 2), un atome d'oxygène (lorsque m vaut 2), un groupe thiol (lorsque m vaut 1), un atome de soufre (lorsque m vaut 2), un groupe sulfoxyde (lorsque m vaut 2), et un groupe sulfone (lorsque m vaut 2), R₁ est un groupe aryle, et R₄ est choisi parmi un atome d'hydrogène, un atome d'halogène, un groupe alkyle, alcényle, ou R₄ est un résidu divalent créant un résidu naphtoxazine au départ de la structure benzoxazine, ou 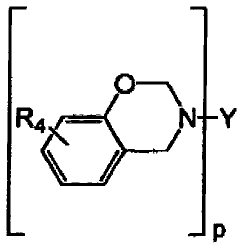 dans laquelle p vaut 2, Y est choisi dans le groupe constitué par un groupe biphényle (lorsque p vaut 2), un groupe diphényl méthane (lorsque p vaut 2), un groupe diphényl isopropane (lorsque p vaut 2), un groupe diphényl sulfure (lorsque p vaut 2), un groupe diphényl sulfoxyde (lorsque p vaut 2), un groupe diphényl sulfone (lorsque p vaut 2), et un groupe diphényl cétone (lorsque p vaut 2), et R₄ est choisi dans le groupe constitué par un atome d'hydrogène, un atome d'halogène, un groupe alkyle et alcényle.

10. Composition selon l'une quelconque des revendications 1 à 9, dans laquelle le composant benzoxazine N-arylée est présent dans une quantité
comprise dans la plage d'environ 50 à environ 95 pour cent en poids, sur la base du poids total de la composition.

11. Composition selon l'une quelconque des revendications 1 à 10, contenant en outre un composant résine époxy.

12. Produit de réaction durci de la composition selon l'une quelconque des revendications 1 à 11.

13. Produit de réaction durci selon la revendication 12, comprenant une couche ou un faisceau de fibres imprégné avec la composition selon l'une quelconque des revendications 1 à 11, avant le durcissement.

14. Procédé de production du produit de réaction durci selon la revendication 13, dont les étapes comprennent :
A) fournir une couche ou un faisceau de fibres ;
B) fournir la composition selon l'une quelconque des revendications 1 à 11 ;
C) joindre la composition et la couche ou le faisceau de fibres pour former un assemblage,
D) éliminer éventuellement l'excès de composition thermodurcissable de l'assemblage,
exposer l'assemblage résultant à des conditions de températures élevées et de pression élevées suffisantes pour imprégner la couche ou le faisceau de fibres avec la composition thermodurcissable pour former le produit de réaction durci.

15. Composition d'adhésif, d'étanchéité ou de revêtement comprenant ou constituée de la composition selon l'une quelconque des revendications 1 à 11.
